# EUROPEAN PATENT SPECIFICATION

(11) **EP 4 092 342 B1**
(45) Date of publication and mention of the grant of the patent: **04.10.2023**
(21) Application number: 20913198.6
(22) Date of filing: 14.01.2020
(51) Int. Cl.: F24F 9/00, F24F 11/74, F24F 120/10, F24F 1/0047, F24F 11/72, F24F 11/77, F24F 11/79, F24F 120/12

(54) **CONTROL DEVICE AND CONTROL METHOD**
STEUERUNGSVORRICHTUNG UND STEUERUNGSVERFAHREN
DISPOSITIF DE COMMANDE ET PROCÉDÉ DE COMMANDE

(43) Date of publication of application: 23.11.2022
(73) Proprietor: MITSUBISHI ELECTRIC CORPORATION, Chiyoda-ku Tokyo 100-8310 (JP)
(72) Inventor: HAMADA, Mamoru, Tokyo 100-8310 (JP); TAMAKI, Shogo, Tokyo 100-8310 (JP); WADA, Makoto, Tokyo 100-8310 (JP)
(74) Representative: Studio Torta S.p.A.
(86) International application number: PCT/JP2020/000899
(87) International publication number: WO 2021/144850

(56) References cited:
- JP-A- 2008 057 951
- JP-A- 2009 299 965
- JP-A- 2017 083 084
- JP-A- 2017 083 084
- US-A1- 2010 010 680

## Description

### Technical Field

The present invention relates to control for air conditioners.

### Background Art

An air conditioning system including a plurality of air conditioners is used for air conditioning of inside of a broad space such as an office. That is, the inside of the space is conditioned into a comfortable temperature by installation of the plurality of air conditioners in the space and performance of air conditioning operation by each of the plurality of air conditioners. Incidentally, the air conditioning operation is cooling operation or heating operation. In such a conventional air conditioning system, each of the plurality of air conditioners detects a temperature of an area for which the air conditioner itself carries out air conditioning, by a temperature sensor, and carries out the air conditioning operation so that a value detected by the temperature sensor becomes a preset temperature, for instance. In the conventional air conditioning system, homogenization of temperatures in the space is pursued in this manner.

In a conventional air conditioning system, meanwhile, in conjunction with an air conditioner that has detected presence of a person, an air conditioner that is in an adjacent position and that has not detected presence of any person carries out air blowing operation (Patent Literature 1, for instance). By such operation, air regulated in temperature by cooling operation or heating operation by the air conditioner that has detected the presence of the person is prevented from flowing out into an area for the air conditioner that has not detected the presence of any person. As a result, efficient temperature regulation only for the area where any person is present can be attained.

A shape, viewed from above, of inside of a space for which the air conditioning system disclosed in Patent Literature 1 is used is partitioned into a plurality of quadrangular areas. In addition, the air conditioning system disclosed in Patent Literature 1 includes a plurality of air conditioners and the air conditioners are respectively installed in roof-spaces of the areas. In the air conditioning system disclosed in Patent Literature 1, further, the air conditioners that are installed in the areas where any person is present carry out the air conditioning operation. On this occasion, the air conditioners that are installed in the areas where no person is present, adjacent to the areas where any person is present carry out the air blowing operation to blow out air downward from blow ports on a side of the areas where any person is present. That is, the air conditioning system disclosed in Patent Literature 1 restrains air, blown out from and regulated in temperature by the air conditioners installed in the areas where a person is present, from flowing out into the areas where no person is present. According to Patent Literature 1, it is argued that selective air conditioning for the areas where any person is present and energy saving can be pursued by such operation of the air conditioning system.

### Citation List

### Patent Literature

Patent Literature 1: JP 2017-083084

### Summary of Invention

### Technical Problem

In order to avoid inflow or outflow of air across a border between an area where any person is present and an area where no person is present, it is necessary to eliminate a pressure difference between the two areas as thoroughly as possible. In the air conditioning system disclosed in Patent Literature 1, however, states of airflow may greatly differ between the two areas, so that a pressure difference may occur across the border between the areas. Therefore, the air conditioning system disclosed in Patent Literature 1 has a problem in that sufficient energy saving cannot be pursued because the outflow of the air regulated in temperature from the area where any person is present cannot be prevented effectively.

The present invention mainly aims at solving such a problem as described above. More particularly, the present invention aims at effectively preventing the outflow of the air regulated in temperature from an area where any person is present and pursuing sufficient energy saving.

### Solution to Problem

According to a first aspect of the present invention, there is provided a control device as defined in claim 1. Preferred embodiments are defined in the dependent claims. According to a second aspect of the present invention there is provided a control method of controlling a plurality of air conditioners as defined in claim 6.

### Advantageous Effects of Invention

According to the present invention, the outflow of the air regulated in temperature from an areas where any person is present can be prevented effectively and thus sufficient energy saving can be pursued.

### Brief Description of Drawings

Fig. 1 is a diagram illustrating a configuration example of an air conditioning system according to Embodiment 1.
Fig. 2 is a diagram illustrating a hardware configuration example of a control device according to Embodiment 1.
Fig. 3 is a diagram illustrating a functional configuration example of the control device according to Embodiment 1.
Fig. 4 is a diagram illustrating an example of placement of air conditioners according to Embodiment 1.
Fig. 5 is a diagram illustrating a schematic configuration example of the air conditioner according to Embodiment 1.
Fig. 6 is a diagram illustrating states of operation of the air conditioners according to Embodiment 1.
Fig. 7 is a diagram illustrating states of operation of the air conditioners according to Embodiment 1.
Fig. 8 is a diagram illustrating states of operation of the air conditioners according to Embodiment 1.
Fig. 9 is a diagram illustrating states of operation of the air conditioners according to Embodiment 1.
Fig. 10 is a diagram illustrating states of operation of the air conditioners according to Embodiment 1.
Fig. 11 is a diagram illustrating states of operation of the air conditioners according to Embodiment 1.
Fig. 12 is a diagram illustrating states of operation of air conditioners according to Embodiment 1.
Fig. 13 is a diagram illustrating states of operation of the air conditioners according to Embodiment 1.
Fig. 14 is a flowchart illustrating an example of operation of the control device according to Embodiment 1.
Fig. 15 is a diagram illustrating a schematic configuration example of an air conditioner according to Embodiment 2.
Fig. 16 is a diagram illustrating states of operation of the air conditioners according to Embodiment 2.

### Description of Embodiments

### Embodiment 1.

### *** Description of configuration ***

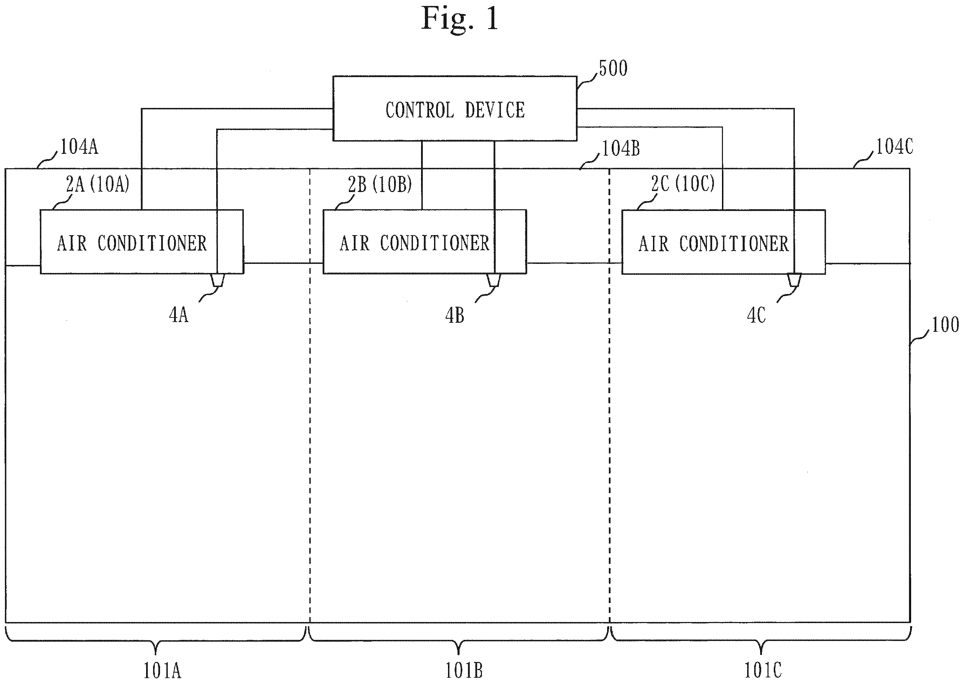

Fig. 1 illustrates a configuration example of an air conditioning system according to the present embodiment.

Fig. 1 illustrates an example in which an air conditioner 2A, an air conditioner 2B, and an air conditioner 2C are placed in a space 100. In Fig. 1, the air conditioner 2A and the air conditioner 2B are placed so as to adjoin and the air conditioner 2B and the air conditioner 2C are placed so as to adjoin. The air conditioner 2A, the air conditioner 2B, and the air conditioner 2C are use-side units.

The space 100, which is an office, for instance, is air-conditioned by the air conditioner 2A, the air conditioner 2B, and the air conditioner 2C.

Hereinbelow, incidentally, the air conditioner 2A, the air conditioner 2B, and the air conditioner 2C will be collectively referred to as air conditioners 2 when the air conditioner 2A, the air conditioner 2B, and the air conditioner 2C do not need to be distinguished.

Additionally, portions obtained by equal division of the space 100 into the number of the air conditioners 2 will be referred to as areas. In the example of Fig. 1, the space 100 is divided into an area 101A, an area 101B, and an area 101C. The area 101A, the area 101B, and the area 101C have quadrangular shapes, viewed from above. Incidentally, division into the area 101A, the area 101B, and the area 101C is virtual and does not mean physical division into the area 101A, the area 101B, and the area 101C. The area 101A and the area 101B adjoin and the area 101B and the area 101C adjoin.

The area 101A is an area to be an object of air conditioning by the air conditioner 2A. The air conditioner 2A is installed in a roof space 104A of the area 101A. The area 101B is an area to be an object of air conditioning by the air conditioner 2B. The air conditioner 2B is installed in a roof space 104B of the area 101B. The area 101C is an area to be an object of air conditioning by the air conditioner 2C. The air conditioner 2C is installed in a roof space 104C of the area 101C.

Incidentally, the area 101A, the area 101B, and the area 101C will be collectively referred to as areas 101 when the area 101A, the area 101B, and the area 101C do not need to be distinguished.

The air conditioner 2A is provided with a human detection sensor 4A. The air conditioner 2B is provided with a human detection sensor 4B. The air conditioner 2C is provided with a human detection sensor 4C. The human detection sensor 4A, the human detection sensor 4B, and the human detection sensor 4C each detect a person.

The human detection sensor 4A, the human detection sensor 4B, and the human detection sensor 4C will be collectively referred to as human detection sensors 4 when the human detection sensor 4A, the human detection sensor 4B, and the human detection sensor 4C do not need to be distinguished.

The human detection sensors 4 are infrared sensors, for instance. Though the human detection sensors 4 are installed on the air conditioners 2 in the present embodiment, incidentally, installation positions of the human detection sensors 4 do not matter. Additionally, the human detection sensors 4 do not have to be infrared sensors. For instance, the human detection sensor 4A may be a sensor to detect presence or absence of manipulation of a keyboard of a personal computer, installed in the area 101A and not illustrated, to detect whether any person is present in the area 101A or not. Similarly, the human detection sensor 4B (4C) may be a sensor to detect presence or absence of manipulation of a keyboard of a personal computer, installed in the area 101B(101C) and not illustrated, to detect whether any person is present in the area 101B(101C) or not. That is, it is sufficient if the human detection sensors 4 are capable of detecting in what position a person is present in the space 100.

The air conditioner 2A, the air conditioner 2B, the air conditioner 2C, the human detection sensor 4A, the human detection sensor 4B, and the human detection sensor 4C are connected to a control device 500.

The control device 500 acquires a result of human detection from any of the human detection sensors 4. Then the control device 500 controls states of operation of the air conditioner 2A, the air conditioner 2B, and the air conditioner 2C depending on the area 101 where any person is detected.

Herein, an outline of control by the control device 500 will be described.

It is assumed that a person is present in the area 101A and that no person is present in the area 101B and the area 101C, for instance.

The control device 500 substantially equalizes airflow in the area 101A where any person is present with airflow in the area 101B where no person is present, adjacent to the area 101A where any person is present, so as to reduce a pressure difference between the areas. By such operation, outflow of air regulated in temperature from the area 101A into the area 101B can be restrained. Specifically, the control device 500 causes the air conditioner 2A in the area 101A to carry out air conditioning operation (cooling operation or heating operation) and causes the air conditioner 2B in the area 101B to carry out air blowing operation. For the area 101C where no person is present, adjacent to the area 101B where no person is present, the control device 500 causes the air conditioner 2C in the area 101C to stop (to carry out neither of the air conditioning operation and the air blowing operation) because it is unnecessary to pay attention to inflow and outflow of air. Additionally, the control device 500 causes the air conditioner 2B to carry out the air blowing operation with an air volume and a wind direction that are equivalent to an air volume and a wind direction of the air conditioning operation by the air conditioner 2A. By such operation, the pressure difference between the area 101A and the area 101B can be reduced and the outflow of air regulated in temperature from the area 101A into the area 101B can be restrained. As a result, the area 101A can be kept having a comfortable temperature even if power of the air conditioner 2A is restrained and thus energy saving can be further pursued than ever.

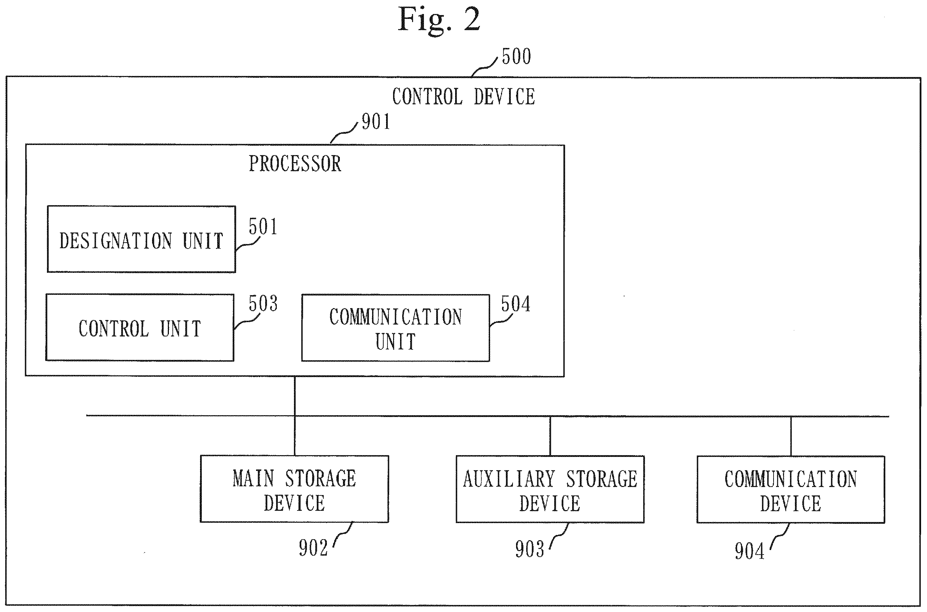

Fig. 2 illustrates a hardware configuration example of the control device 500 according to the present embodiment.

The control device 500 according to the present embodiment is a computer. An operation procedure for the control device 500 corresponds to a control method.

The control device 500 includes a processor 901, a main storage device 902, an auxiliary storage device 903, and a communication device 904, as hardware.

Programs that implement functions of a designation unit 501, a control unit 503, and a communication unit 504 that will be described later are stored in the auxiliary storage device 903.

These programs are loaded from the auxiliary storage device 903 into the main storage device 902. Then the processor 901 executes these programs to carry out operation of the designation unit 501, the control unit 503, and the communication unit 504.

Fig. 2 schematically represents a state in which the processor 901 executes the programs that implement the functions of the designation unit 501, the control unit 503, and the communication unit 504.

The communication device 904 communicates with the air conditioners 2 and the human detection sensors 4.

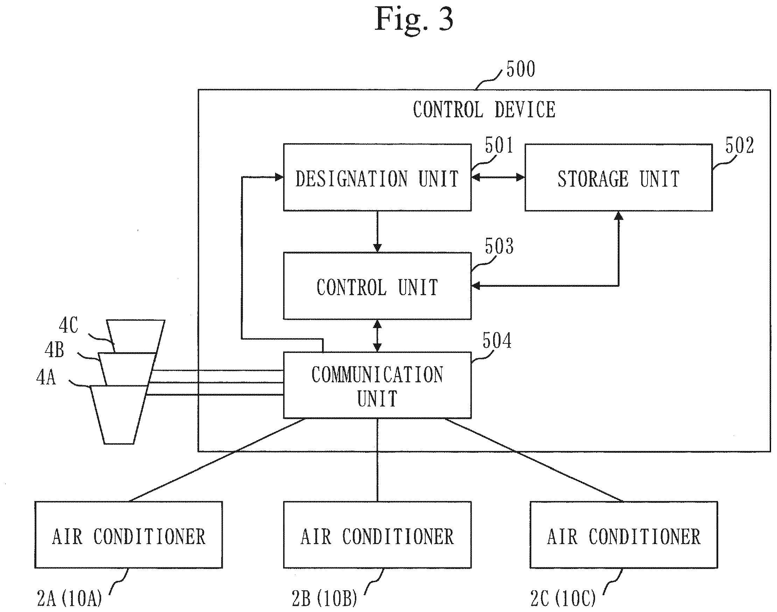

Fig. 3 illustrates a functional configuration example of the control device 500 according to the present embodiment.

The designation unit 501 designates an air conditioner 2, placed in an area 101 in the space 100 where presence of any person is detected, as a first air conditioner, among the plurality of air conditioners 2. In addition, the designation unit 501 designates an air conditioner 2, provided adjacent to the first air conditioner, as a second air conditioner.

A storage unit 502 stores association between a human detection sensor 4 and an air conditioner 2 that are related with each other. In the example of Fig. 1, the storage unit 502 stores the association between the human detection sensor 4A and the air conditioner 2A. In addition, the storage unit 502 stores the association between the human detection sensor 4B and the air conditioner 2B. Further, the storage unit 502 stores the association between the human detection sensor 4C and the air conditioner 2C. Meanwhile, the storage unit 502 stores positional relation among the plurality of air conditioners 2. In the example of Fig. 1, the storage unit 502 stores a fact that the air conditioner 2A, the air conditioner 2B, and the air conditioner 2C are placed from left in order of mention in the space 100.

With reference to the association between the human detection sensors 4 and the air conditioners 2 that is stored in the storage unit 502, the designation unit 501 designates an air conditioner 2 corresponding to a human detection sensor 4 having detected a person, as the first air conditioner. With reference to placement of the air conditioners 2 that is stored in the storage unit 502, additionally, the designation unit 501 designates an air conditioner 2 placed adjacent to the first air conditioner, as the second air conditioner.

Further, the storage unit 502 stores the state of operation of each of the air conditioners 2. That is, the storage unit 502 stores which state each of the air conditioner 2A, the air conditioner 2B, and the air conditioner 2C is in among a state of carrying out the air conditioning operation (cooling operation, heating operation), a state of carrying out the air blowing operation, and a state of being stopped. In case where an air conditioner 2 is carrying out the air conditioning operation, additionally, the storage unit 502 stores an air volume and a wind direction of blown air for each blow port of the air conditioner 2 that is carrying out the air conditioning operation.

The storage unit 502 is implemented by the main storage device 902 or the auxiliary storage device 903.

The control unit 503 causes the first air conditioner to carry out either of the cooling operation and the heating operation as the air conditioning operation. Meanwhile, the control unit 503 causes the second air conditioner to carry out the air blowing operation with an air volume and a wind direction that are equivalent to an air volume and a wind direction of the air conditioning operation by the first air conditioner. As will be described later, the air conditioners 2 each include a plurality of blow ports. The control unit 503 causes the second air conditioner to carry out the air blowing operation while controlling an air volume and a wind direction from each blow port of the second air conditioner so that the air volume and the wind direction become equivalent to an air volume and a wind direction from a corresponding blow port of the first air conditioner.

According to the invention, the term "equivalent" refers to an air volume range of ±10%, preferably, and refers to an air volume range of ±30% at maximum whereas the wind direction is the same. That is, it can be said that the second air conditioner carries out the air blowing operation with the air volume and the wind direction that are equivalent to the air volume and the wind direction of the air conditioning operation by the first air conditioner, on condition that the air volume of the second air conditioner is in the ±30% range from the air volume of the first air conditioner and that the wind direction of the second air conditioner is the same as the wind direction of the first air conditioner.

In case where a third air conditioner is placed adjacent to the second air conditioner, meanwhile, the control unit 503 causes the third air conditioner, placed adjacent to the second air conditioner, to carry out neither of the air conditioning operation and the air blowing operation.

The control unit 503 controls the state of operation of each of the air conditioners 2 by transmitting an instruction command instructing the state of operation of the air conditioner 2 through the communication unit 504 to the air conditioner 2.

The communication unit 504 communicates with the human detection sensors 4 and the air conditioners 2.

More specifically, the communication unit 504 receives an ID (Identifier) of a human detection sensor 4 having detected presence of a person, from the human detection sensor 4. The communication unit 504 then notifies the designation unit 501 of the ID of the human detection sensor 4.

Meanwhile, the communication unit 504 acquires an instruction command to be given from the control unit 503 to each of the air conditioners 2. Then the communication unit 504 transmits the acquired instruction command to the corresponding air conditioner 2.

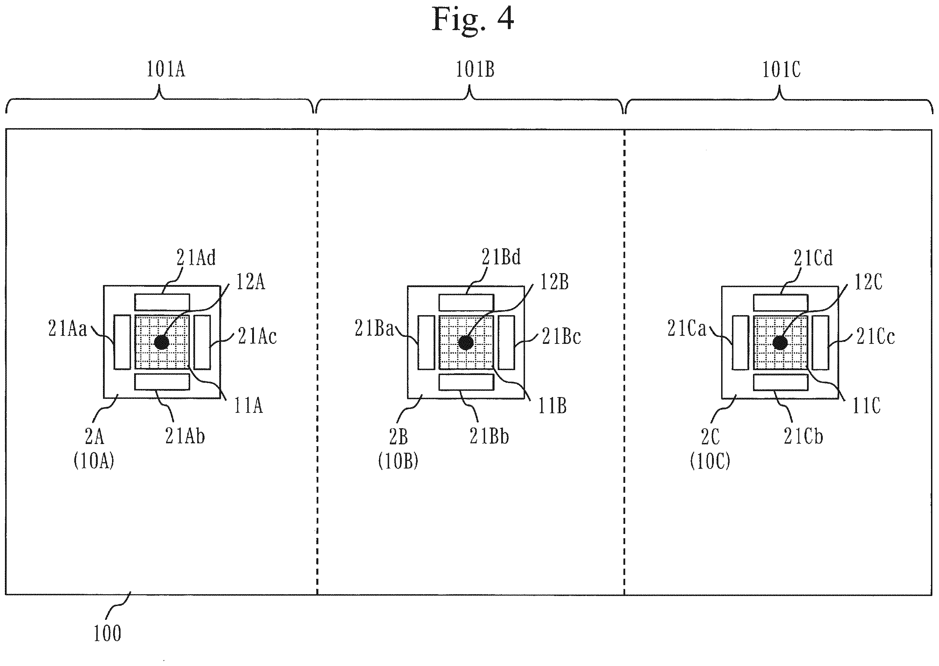

Fig. 4 illustrates a state of a ceiling portion of the space 100 that is viewed upward from below.

That is, Fig. 4 illustrates positions of main units 10 of the air conditioners 2 and of suction ports 11 and blow ports 21 provided on the main units 10.

For components of the air conditioner 2A, incidentally, "A" is provided following a number representing each of the components. Similarly, for components of the air conditioner 2B, incidentally, "B" is provided following a number representing each of the components. Similarly, for components of the air conditioner 2C, incidentally, "C" is provided following a number representing each of the components. For instance, the suction port 11 of the air conditioner 2A is represented as suction port 11A, the suction port 11 of the air conditioner 2B is represented as suction port 11B, and the suction port 11 of the air conditioner 2C is represented as suction port 11C.

In case where a plurality of identical components are present in one air conditioner 2, additionally, the components are distinguished by provision of a small letter of alphabet at end of reference characters.

For instance, four blow ports 21A are placed on the air conditioner 2A. In order to distinguish these blow ports 21A, hereinbelow, representations as blow port 21Aa, blow port 21Ab, blow port 21Ac, and blow port 21Ad will be made.

Each of the air conditioners 2 is made of the main unit 10 having the suction port 11 and the four blow ports 21. On a bottom surface potion of the main unit 10, the suction port 11 communicating with the area 101 is formed. The main unit 10 cools or heats air in the area 101 sucked in through the suction port 11 and blows out the cooled or heated air through the blow ports 21. In plan view, a center 12 of the suction port 11 is on the center of the area 101. Incidentally, the centers 12 of the suction ports 11 of the three air conditioners 2 are placed at equal intervals so that the space is trisected in Fig. 4, whereas the centers 12 of the suction ports 11 do not have to be placed at equal intervals. That is, the area 101A, the area 101B, and the area 101C may differ in size.

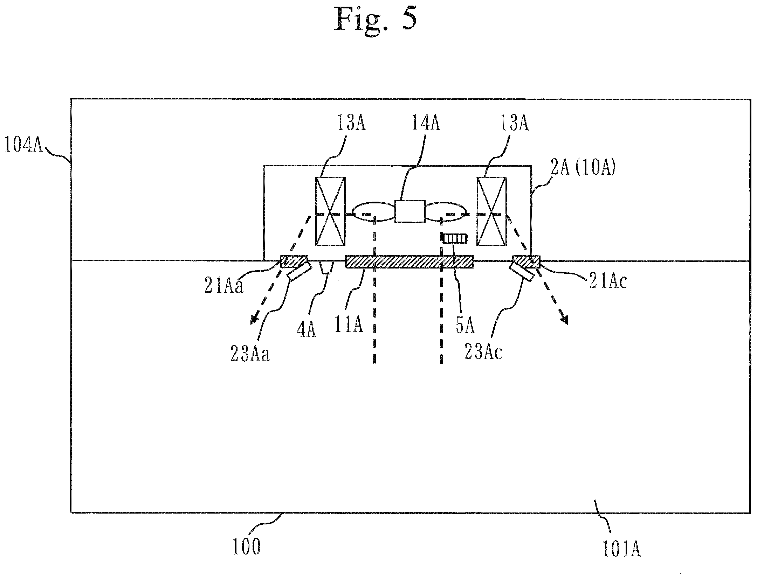

Fig. 5 illustrates a schematic configuration of the air conditioner 2A according to Embodiment 1.

The air conditioner 2A, the air conditioner 2B, and the air conditioner 2C have the same configuration and thus the air conditioner 2A will be described below on behalf of those.

As described above, the air conditioner 2A includes the main unit 10A installed in the roof space 104A in the area 101A. Inside the main unit 10A, a blower 14A and a heat exchanger 13A are housed. By the blower 14A, air in the area 101A is sucked in through the suction port 11A of the main unit 10A and the sucked air is blown out from the blow ports 21A into the area 101A. The heat exchanger 13A cools or heats the air in the area 101A, sucked into the main unit 10A by the blower 14A, so as to regulate a temperature of the sucked air. When the air conditioner 2A carries out the cooling operation, for details, refrigerant having become lower in temperature than the air in the area 101A flows in the heat exchanger 13A and the air in the area 101A, sucked into the main unit 10A, is cooled by the refrigerant. When the air conditioner 2A carries out the heating operation, meanwhile, the refrigerant having become higher in temperature than the air in the area 101A flows in the heat exchanger 13A and the air in the area 101A, sucked into the main unit 10A, is heated by the refrigerant.

Herein, up-down wind direction vanes 23A may be of fixed type which does not move during operation of the air conditioner 2A or may be of movable type of which a tilt can be changed by electric power during operation of the air conditioner 2A. The up-down wind direction vanes 23A according to the present embodiment are of the movable type of which the tilt can be changed by the electric power during the operation of the air conditioner 2A and thus a change to any tilt can be attained. Accordingly, the tilts of the up-down wind direction vanes 23A according to the present embodiment can be changed between the tilts for the cooling operation and the tilts for the heating operation. Therefore, the air conditioner 2A according to the present embodiment includes power supply lines to supply electric power to the up-down wind direction vanes 23A. The power supply lines are connected to drive sources, not illustrated, for the up-down wind direction vanes 23A. The drive sources are motors, for instance. In Fig. 5, incidentally, illustration of the power supply lines is omitted. Additionally, the blow ports 21A may be provided with left-right wind direction vanes that are capable of changing the wind directions to left or right.

Though the blow ports 21A and the up-down wind direction vanes 23A are illustrated only at left and right in Fig. 5, the blow ports 21A and the up-down wind direction vanes 23A are placed in front and back of Fig. 5, as well. For conciseness of the drawing, illustration of the blow ports 21A and the up-down wind direction vanes 23A in the front and back is omitted in Fig. 5. The blow ports 21A and the up-down wind direction vanes 23A in the front and back are similar to the blow ports 21A and the up-down wind direction vanes 23A at the left and right.

Meanwhile, the air conditioner 2A according to the present embodiment includes a temperature sensor 5A to detect a temperature of the air in the area 101A. In the present embodiment, the temperature sensor 5A is installed on a downstream side of the suction port 11A in the main unit 10A. That is, the present embodiment has a configuration in which the temperature sensor 5A detects the temperature of the air in the area 101A that has been sucked into the main unit 10.

### *** Description of operation ***

Subsequently, operation of the control device 500 according to the present embodiment will be described.

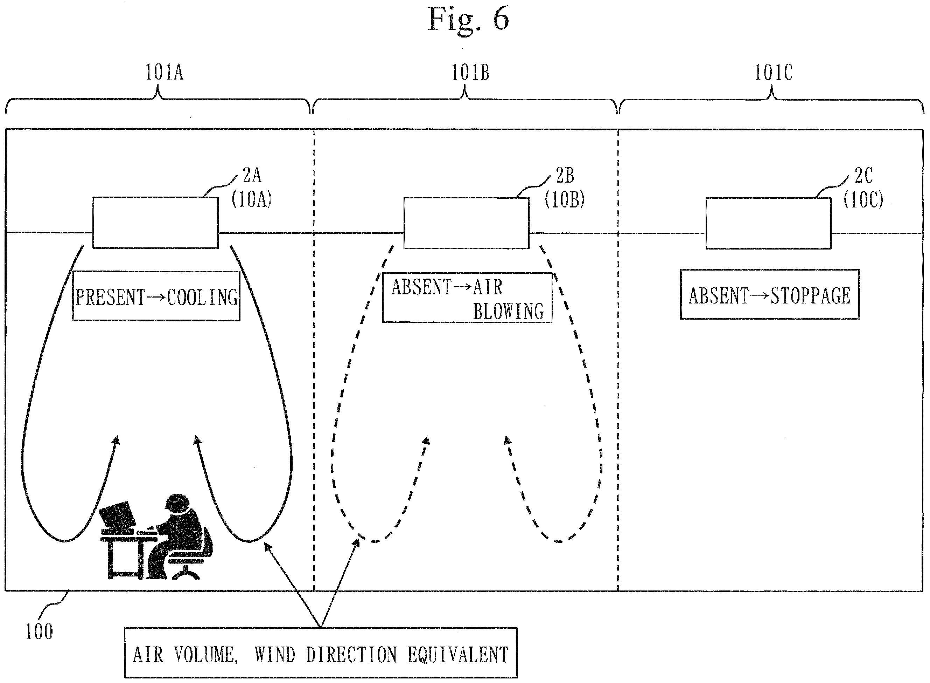

With use of Fig. 3 and Fig. 6, control over each of the air conditioners 2 by the control device 500 according to the present embodiment will be described.

Fig. 6 illustrates an example of the control in which the control device 500 causes an air conditioner 2 to carry out the cooling operation.

Herein, it is assumed that presence of a person is detected by the human detection sensor 4A (presence of any person is not detected by the human detection sensor 4B and the human detection sensor 4C).

The ID of the human detection sensor 4A is transmitted from the human detection sensor 4A to the control device 500 and the communication unit 504 in the control device 500 receives the ID of the human detection sensor 4A. The communication unit 504 transfers the ID of the human detection sensor 4A to the designation unit 501.

With reference to the association between the human detection sensors 4 and the air conditioners 2 in the storage unit 502, the designation unit 501 determines that the air conditioner 2 associated with the human detection sensor 4A is the air conditioner 2A. In addition, the designation unit 501 determines that the air conditioner 2 placed adjacent to the air conditioner 2A is the air conditioner 2B. Further, the designation unit 501 determines that the air conditioner 2 placed adjacent to the air conditioner 2B is the air conditioner 2C.

Accordingly, the designation unit 501 designates the air conditioner 2A as the first air conditioner and designates the air conditioner 2B as the second air conditioner.

The designation unit 501 notifies the control unit 503 about the air conditioner 2A as the first air conditioner and about the air conditioner 2B as the second air conditioner.

The control unit 503 decides to cause the air conditioner 2A as the first air conditioner to carry out the cooling operation. Meanwhile, the control unit 503 decides to cause the air conditioner 2B as the second air conditioner to carry out the air blowing operation. As described above, the control unit 503 decides to cause the air conditioner 2B to carry out the air blowing operation with an air volume and a wind direction that are equivalent to an air volume and a wind direction of the cooling operation by the air conditioner 2A. Meanwhile, the control unit 503 decides to cause the air conditioner 2C to carry out neither of the cooling operation and the air blowing operation.

Then the control unit 503 generates an instruction command giving a notification of decided contents for each of the air conditioners 2. Subsequently, the control unit 503 outputs the generated instruction commands to the communication unit 504.

The communication unit 504 acquires the instruction command for each of the air conditioners 2 from the control unit 503 and outputs the acquired instruction command to the air conditioner 2 with use of the communication device 904.

Specifically, the communication unit 504 transmits the instruction command instructing execution of the cooling operation to the air conditioner 2A. Meanwhile, the communication unit 504 transmits the instruction command instructing execution of the air blowing operation to the air conditioner 2B. Additionally, the communication unit 504 transmits the instruction command instructing stoppage of operation to the air conditioner 2C.

The air conditioner 2A carries out the cooling operation, pursuant to the instruction command.

The air conditioner 2B carries out the air blowing operation, pursuant to the instruction command. The air volume and the wind direction in the air blowing operation are equivalent to the air volume and the wind direction in the cooling operation.

The air conditioner 2C carries out neither of the cooling operation and the air blowing operation, pursuant to the instruction command.

In the area 101C that is adjacent to the area 101B where no person is present, the air conditioner 2C is stopped because it is unnecessary to control inflow and outflow of air.

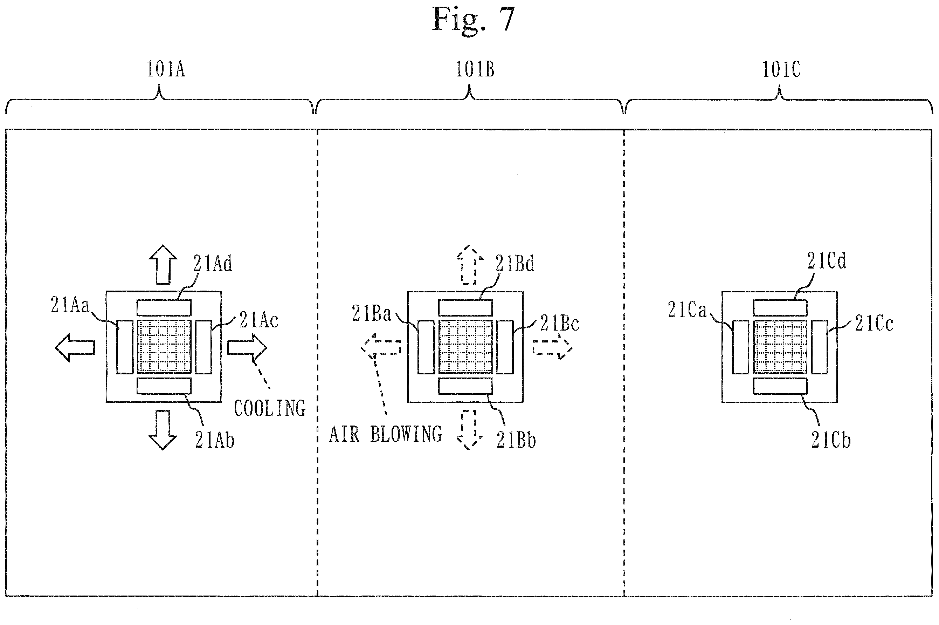

Fig. 7 illustrates the air volume and the wind directions of blown air from the blow ports of each of the air conditioners 2. In Fig. 7, solid arrows represent the blown air in the cooling operation and dashed arrows represent the blown air in the air blowing operation. In Fig. 7, additionally, lengths of the arrows represent the air volumes of the blown air and directions of the arrows represent the wind directions of the blown air.

In an example of Fig. 7, the air volumes of the blown air are uniform among the blow port 21Aa, the blow port 21Ab, the blow port 21Ac, and the blow port 21Ad. In the example of Fig. 7, additionally, the blown air is blown out from each of the blow port 21Aa, the blow port 21Ab, the blow port 21Ac, and the blow port 21Ad in the direction tilted by 90 degrees relative to the directions for the adjoining blow ports 21.

The air volume and the wind direction from the blow port 21Ba are equivalent to the air volume and the wind direction from the blow port 21Aa. The air volume and the wind direction from the blow port 21Bb are equivalent to the air volume and the wind direction from the blow port 21Ab. The air volume and the wind direction from the blow port 21Bc are equivalent to the air volume and the wind direction from the blow port 21Ac. The air volume and the wind direction from the blow port 21Bd are equivalent to the air volume and the wind direction from the blow port 21Ad. In case where it is difficult to equivalently control the air volumes and the wind directions from all the blow ports 21, it is preferable that the air volumes and the wind directions of the blown air at least from the blow port 21Aa, the blow port 21Ac, the blow port 21Ba, and the blow port 21Bc should be made equivalent.

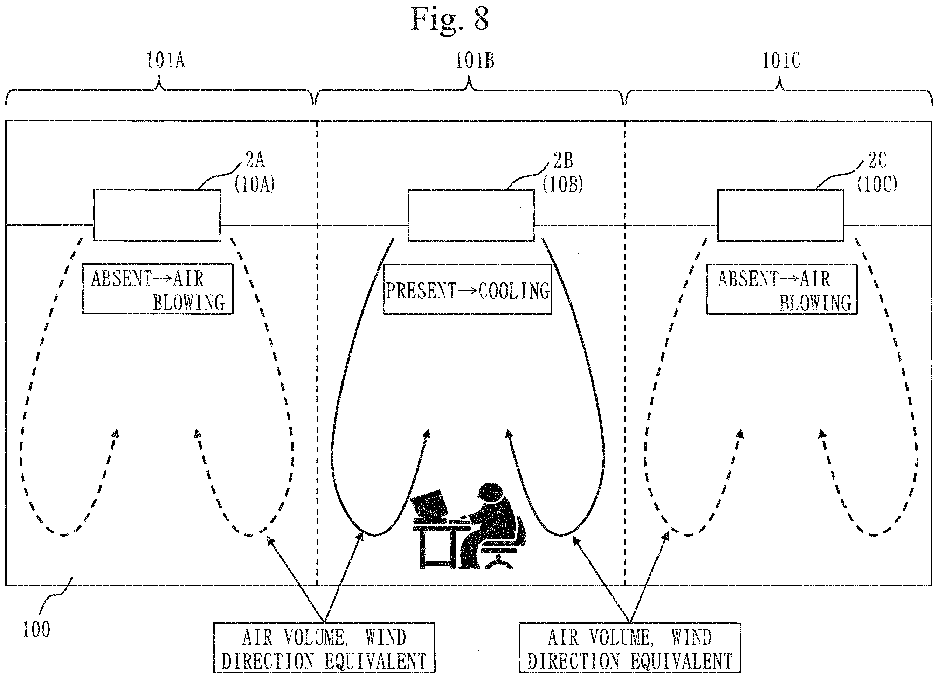

In case where any person is present in the area 101B as illustrated in Fig. 8, for instance, the designation unit 501 designates the air conditioner 2B as the first air conditioner, based on a notification from the human detection sensor 4B. In addition, the air conditioner 2A and the air conditioner 2C are placed on both sides of the air conditioner 2B and thus the designation unit 501 designates the air conditioner 2A and the air conditioner 2C as the second air conditioners. Through the communication unit 504, the control unit 503 then transmits an instruction command instructing execution of the cooling operation to the air conditioner 2B and transmits instruction commands instructing execution of the air blowing operation to the air conditioner 2A and the air conditioner 2C.

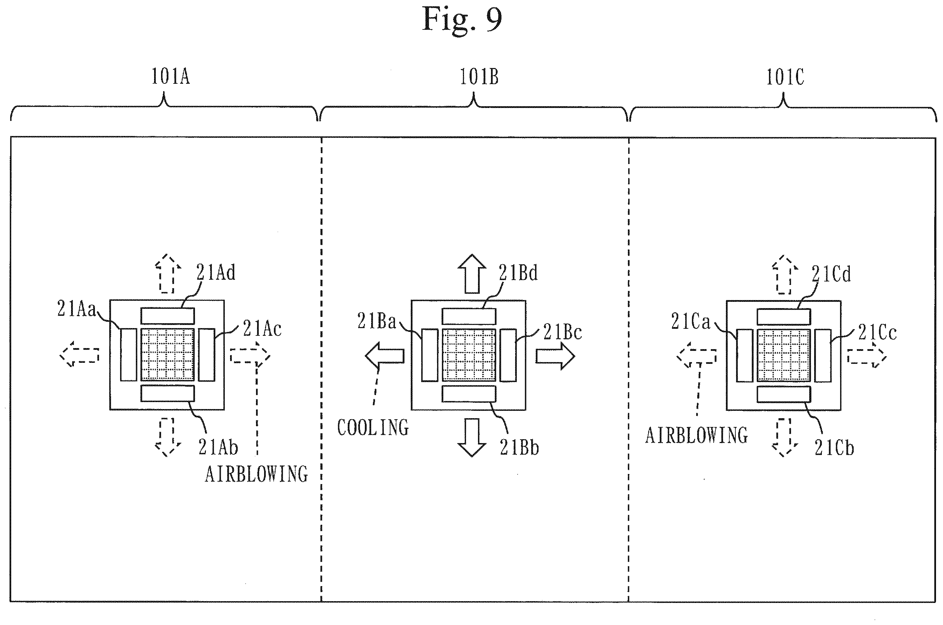

As a result, the air volume and the wind direction from the blow port 21Aa, the air volume and the wind direction from the blow port 21Ba, and the air volume and the wind direction from the blow port 21Ca become equivalent as illustrated in Fig. 9. Additionally, the air volume and the wind direction from the blow port 21Ab, the air volume and the wind direction from the blow port 21Bb, and the air volume and the wind direction from the blow port 21Cb become equivalent. Further, the air volume and the wind direction from the blow port 21Ac, the air volume and the wind direction from the blow port 21Bc, and the air volume and the wind direction from the blow port 21Cc become equivalent. Furthermore, the air volume and the wind direction from the blow port 21Ad, the air volume and the wind direction from the blow port 21Bd, and the air volume and the wind direction from the blow port 21Cd become equivalent.

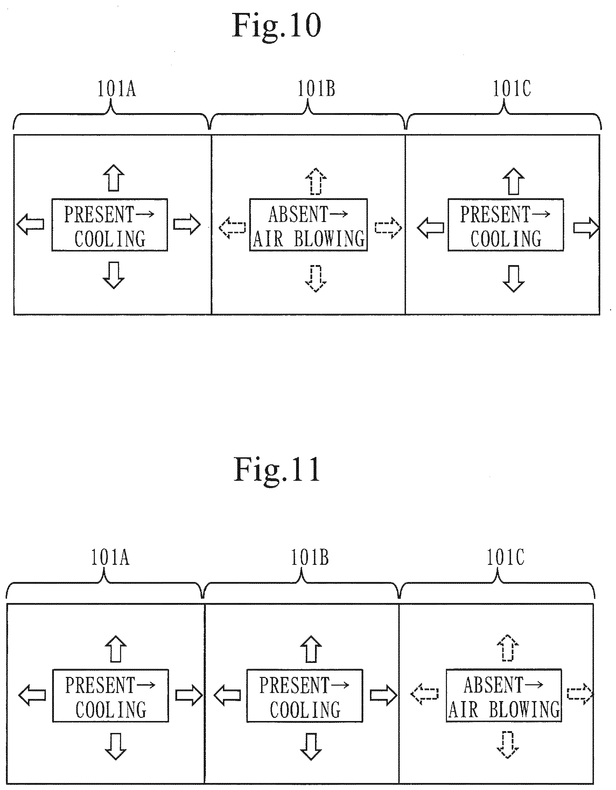

Fig. 10 to Fig. 13 illustrate other examples of the control. In Fig. 10 to Fig. 13, states of the space 100 viewed from a direction of the ceiling are illustrated.

Though the air conditioners 2 are not illustrated in Fig. 10 to Fig. 13, incidentally, it is assumed that an air conditioner 2N is placed in an area 101N (N is an arbitrary alphabet letter). That is, it is assumed that the air conditioner 2A is placed in the area 101A, that the air conditioner 2B is placed in the area 101B, and that an air conditioner 2I is placed in an area 1011.

In case where any person is present in the area 101A and the area 101C as illustrated in Fig. 10, the designation unit 501 designates the air conditioner 2A and the air conditioner 2C as the first air conditioners. Additionally, the designation unit 501 designates the air conditioner 2B, positioned adjacent to the air conditioner 2A and the air conditioner 2C, as the second air conditioner. Through the communication unit 504, the control unit 503 then transmits instruction commands instructing the execution of the cooling operation to the air conditioner 2A and the air conditioner 2C and transmits an instruction command instructing the execution of the air blowing operation to the air conditioner 2B.

Meanwhile, in case where any person is present in the area 101A and the area 101B as illustrated in Fig. 11, the designation unit 501 designates the air conditioner 2A and the air conditioner 2B as the first air conditioners. Additionally, the designation unit 501 designates the air conditioner 2C, positioned adjacent to the air conditioner 2B, as the second air conditioner. Through the communication unit 504, the control unit 503 then transmits instruction commands instructing the execution of the cooling operation to the air conditioner 2A and the air conditioner 2B and transmits an instruction command instructing the execution of the air blowing operation to the air conditioner 2C.

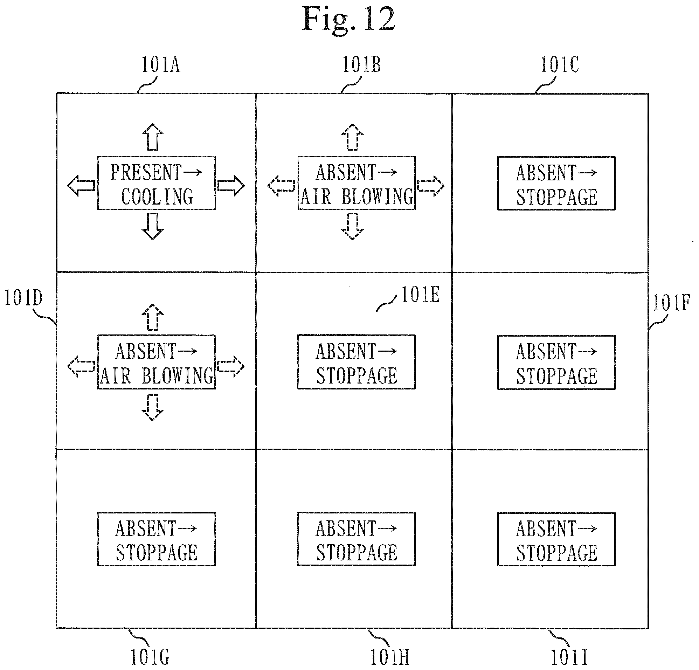

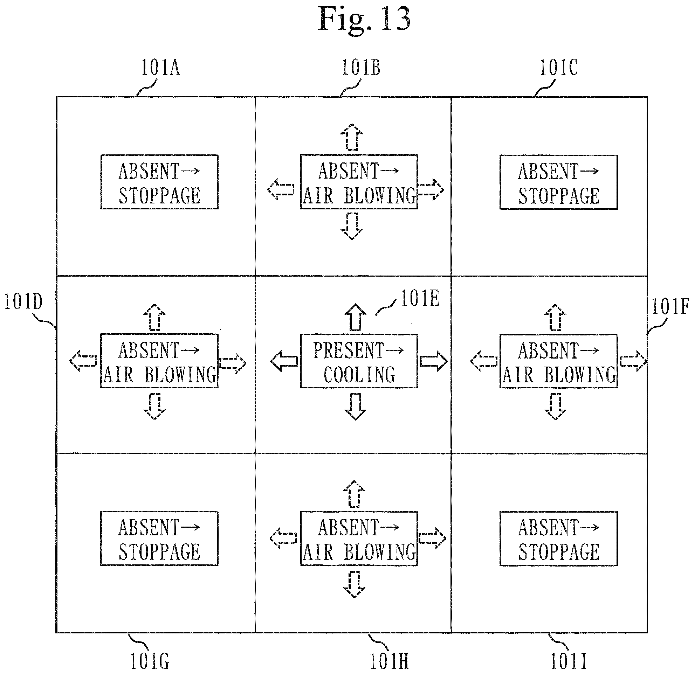

In case where nine ceiling mounted air conditioners 2 are present in the space 100 and arranged in an array, as illustrated in Fig. 12 and Fig. 13, meanwhile, nine areas 101 are formed logically.

In Fig. 12, a person is present in the area 101A. In this case, the designation unit 501 designates the air conditioner 2A as the first air conditioner. Additionally, the designation unit 501 designates the air conditioner 2B and the air conditioner 2D, positioned adjacent to the air conditioner 2A, as the second air conditioners. Through the communication unit 504, the control unit 503 then transmits an instruction command instructing the execution of the cooling operation to the air conditioner 2A and transmits instruction commands instructing the execution of the air blowing operation to the air conditioner 2B and the air conditioner 2D. The control unit 503 transmits instruction commands instructing the stoppage of operation to the other air conditioners 2. In the example of Fig. 12, incidentally, the designation unit 501 does not designate an air conditioner 2E, placed diagonally with respect to the air conditioner 2A, as the second air conditioner. Accordingly, the air conditioner 2E does not carry out the air blowing operation.

In Fig. 13, a person is present in the area 101E. In this case, the designation unit 501 designates the air conditioner 2E as the first air conditioner. Additionally, the designation unit 501 designates the air conditioner 2B, the air conditioner 2D, the air conditioner 2F, and the air conditioner 2H, positioned adjacent to the air conditioner 2E, as the second air conditioners. Through the communication unit 504, the control unit 503 then transmits an instruction command instructing the execution of the cooling operation to the air conditioner 2E and transmits instruction commands instructing the execution of the air blowing operation to the air conditioner 2B, the air conditioner 2D, the air conditioner 2F, and the air conditioner 2H.

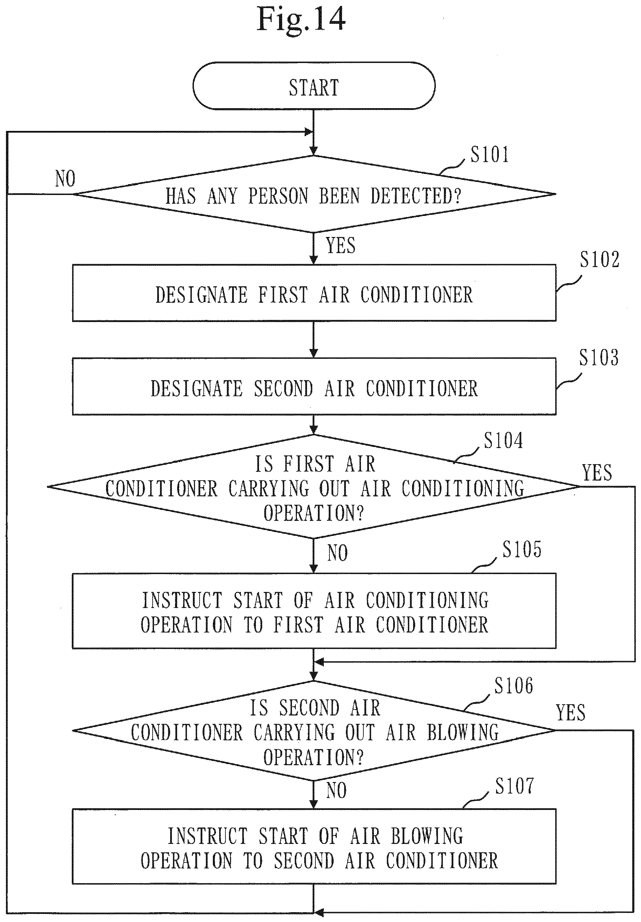

Fig. 14 is a flowchart illustrating an example of operation of the control device 500 according to the present embodiment.

In step S101, the designation unit 501 determines whether any person has been detected or not.

Specifically, the designation unit 501 determines that any person has been detected, in case where the designation unit 501 has been notified of the ID of any human detection sensor 4 from the communication unit 504.

In case where it is determined in step S101 that any person has been detected (YES), the designation unit 501 designates the first air conditioner in step S102.

In step S103, additionally, the designation unit 501 designates an air conditioner 2, positioned adjacent to the first air conditioner, as the second air conditioner.

The designation unit 501 notifies the control unit 503 about the first air conditioner and the second air conditioner.

In step S 104, the control unit 503 refers to the storage unit 502 to determine whether the first air conditioner is carrying out the air conditioning operation or not.

In case where it is found in step S104 that the first air conditioner is carrying out the air conditioning operation (YES), processing is advanced to step S106.

In case where it is found in step S104 that the first air conditioner is not carrying out the air conditioning operation (NO), meanwhile, the control unit 503 instructs start of the air conditioning operation to the first air conditioner in step S105. Specifically, the control unit 503 transmits an instruction command, instructing the start of the air conditioning operation to the first air conditioner, through the communication unit 504 to the first air conditioner.

In this case, the control unit 503 decides the air volume and the wind direction of blown air from each of the blow ports 21 in the air conditioning operation by the first air conditioner. Then the control unit 503 describes the decided air volume and wind direction of the blown air from each of the blow ports 21 in the instruction command. Further, the control unit 503 stores, in the storage unit 502, the decided air volume and wind direction of the blown air from each of the blow ports 21.

In step S106, the control unit 503 refers to the storage unit 502 to determine whether the second air conditioner is carrying out the air blowing operation or not.

In case where it is found in step S106 that the second air conditioner is carrying out the air blowing operation (YES), the processing is returned to step S101.

In case where it is found in step S106 that the second air conditioner is not carrying out the air blowing operation (NO), meanwhile, the control unit 503 instructs start of the air blowing operation to the second air conditioner in step S 107. Specifically, the control unit 503 transmits an instruction command, instructing the start of the air blowing operation to the second air conditioner, through the communication unit 504 to the second air conditioner.

In this case, the control unit 503 refers to the storage unit 502 to describe an air volume and a wind direction that are equivalent to the air volume and the wind direction of the blown air from each of the blow ports 21 of the first air conditioner, in the instruction command to the second air conditioner.

After step S107 is ended, the processing is returned to step S101.

### *** Description of effects of embodiment ***

In this manner, according to the present embodiment, the pressure difference among the areas can be reduced, so that the outflow of air regulated in temperature from an area where any person is present can be prevented effectively. According to the present embodiment, additionally, the operation of the air conditioners in the areas where no person is present can be stopped. According to the present embodiment, therefore, sufficient energy saving can be pursued.

Incidentally, it can be conceived that a person who is present in the area 101 for the first air conditioner changes the air volume and the wind directions of the first air conditioner by remote controller after control illustrated in Fig. 14 is exerted. In this case, the first air conditioner gives the control device 500 a notification of the air volume and the wind directions resulting from such change. In the control device 500, the control unit 503 transmits an instruction command, giving a notification of the air volume and the wind directions included in the notification and resulting from the change, through the communication unit 504 to the second air conditioner. Thus the second air conditioner is enabled to continue the air blowing operation with an air volume and wind directions that are equivalent to the air volume and the wind directions of the first air conditioner which result from the change.

Meanwhile, it can also be conceived that a person who is present in the area 101 for the first air conditioner instructs stoppage of the air conditioning operation or transition to the air blowing operation in the first air conditioner by remote controller after the control illustrated in Fig. 14 is exerted. In this case, the first air conditioner notifies the control device 500 of the stoppage of the air conditioning operation or the transition to the air blowing operation. In the control device 500, the control unit 503 transmits an instruction command, instructing stoppage of the air blowing operation, through the communication unit 504 to the second air conditioner. Thus useless air blowing operation by the second air conditioner can be avoided.

Further, it can also be conceived that an exit of a person from the area 101 corresponding to the first air conditioner makes the human detection sensor 4 detect no person for a certain period of time after the control illustrated in Fig. 14 is exerted. In this case, the control unit 503 transmits an instruction command instructing the stoppage of the air conditioning operation, through the communication unit 504 to the first air conditioner. Meanwhile, the control unit 503 transmits an instruction command, instructing the stoppage of the air blowing operation, through the communication unit 504 to the second air conditioner. Thus useless air conditioning operation by the first air conditioner can be stopped and useless air blowing operation by the second air conditioner can be avoided.

### Embodiment 2.

In relation to the present embodiment, differences from Embodiment 1 will be principally described.

Incidentally, matters that are not described below are similar to matters of Embodiment 1.

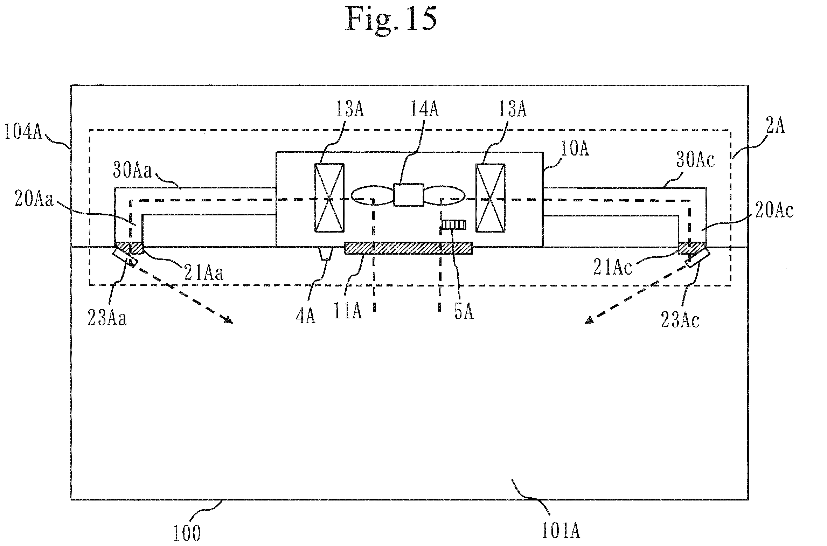

Fig. 15 illustrates a schematic configuration of the air conditioner 2A according to the present embodiment.

Hereinbelow, the configuration of the air conditioner 2A will be described with use of Fig. 15, as with Fig. 5. Configuration of the air conditioner 2B and the air conditioner 2C are identical to the configuration of the air conditioner 2A.

In Fig. 15, compared with the configuration of Fig. 5, ducts 30A are added and the ducts 30A are provided with blowing units 20A. Though the ducts 30A, blowing units 20A, the blow ports 21A, and the up-down wind direction vanes 23A are illustrated only at left and right in Fig. 15, the ducts 30A, blowing units 20A, the blow ports 21A, and the up-down wind direction vanes 23A are placed in front and back of Fig. 15, as well. For conciseness of the drawing, illustration of the ducts 30A, blowing units 20A, the blow ports 21A, and the up-down wind direction vanes 23A in the front and back is omitted in Fig. 15. The ducts 30A, blowing units 20A, the blow ports 21A, and the up-down wind direction vanes 23A in the front and back are similar to the ducts 30A, blowing units 20A, the blow ports 21A, and the up-down wind direction vanes 23A at the left and right.

Elements other than the ducts 30A and the blowing units 20A are similar to elements illustrated in Fig. 5 and description thereof is therefore omitted.

The blowing unit 20Aa and the blowing unit 20Ac are connected to the main unit 10A by the ducts 30A.

Air sucked into the main unit 10A and regulated in temperature flows into the ducts 30A which are connected to the blowing units 20A, so as to be separated into streams in four directions. Then the air having flowed into the ducts 30A is blown out from the blow ports 21A of the blowing units 20A into the area 101A.

The blowing unit 20Aa and the blowing unit 20Ac include the up-down wind direction vanes 23A to vertically regulate directions of the air that is blown out from the blow ports 21A. During air conditioning operation, each of the up-down wind direction vanes 23A provided in the blowing units 20A has a tilt relative to a vertical line so as to guide the air blown from the blow port 21A toward the center of the area 101A.

In case where any person is detected in the area 101A and where no person is detected in the area 101B and the area 101C, in a configuration in which the air conditioner 2A illustrated in Fig. 15, the air conditioner 2B, and the air conditioner 2C are used, the air conditioner 2A carries out the air conditioning operation, the air conditioner 2B carrying out air blowing operation, the air conditioner 2C stopping operation, as with Embodiment 1.

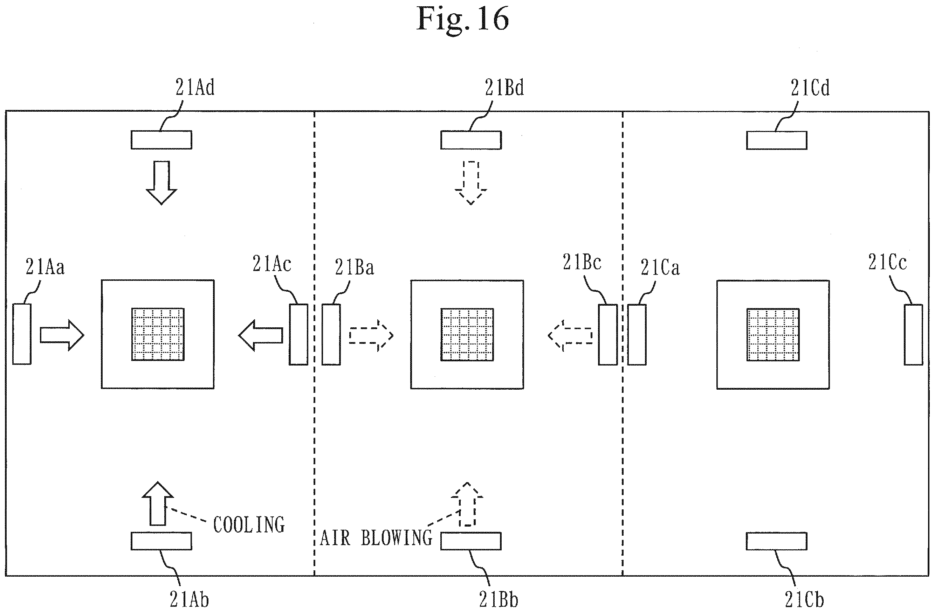

More specifically, the air conditioner 2A carries out the air conditioning operation with air volumes and wind directions that are illustrated in Fig. 16. Meanwhile, the air conditioner 2B carries out the air blowing operation with air volumes and wind directions that are illustrated in Fig. 16.

In the present embodiment as well, the air volume and the wind direction from the blow port 21Ba are equivalent to the air volume and the wind direction from the blow port 21Aa, as with Embodiment 1. Additionally, the air volume and the wind direction from the blow port 21Bb are equivalent to the air volume and the wind direction from the blow port 21Ab. Further, the air volume and the wind direction from the blow port 21Bc are equivalent to the air volume and the wind direction from the blow port 21Ac. Furthermore, the air volume and the wind direction from the blow port 21Bd are equivalent to the air volume and the wind direction from the blow port 21Ad.

Even in case where the air conditioners 2 having the configuration illustrated in Fig. 15 are used, as described above, the pressure difference among the areas can be reduced so that the outflow of air regulated in temperature from an area where a person is present can be prevented effectively.

The embodiments of the present invention have been described above and these two embodiments may be embodied in combination.

Alternatively, one of these two embodiments may be partially embodied. Alternatively, these two embodiments may be embodied partially in combination.

Incidentally, the present invention is not limited by these embodiments and may be modified in various manners as appropriate without departing from the scope of the appended claims.

### ^{∗∗∗} Supplementary description of hardware configuration ^{∗∗∗}

Finally, a supplementary description of the hardware configuration of the control device 500 will be given.

The processor 901 illustrated in Fig. 2 is an IC (Integrated Circuit) to carry out processing.

The processor 901 is a CPU (Central Processing Unit), a DSP (Digital Signal Processor), or the like.

The main storage device 902 illustrated in Fig. 2 is a RAM (Random Access Memory).

The auxiliary storage device 903 illustrated in Fig. 2 is a ROM (Read Only Memory), a flash memory, an HDD (Hard Disk Drive), or the like.

The communication device 904 illustrated in Fig. 2 is an electronic circuit to execute a communication process for data.

The communication device 904 is a communication chip or an NIC (Network Interface Card), for instance.

Meanwhile, an OS (Operating System) is also stored in the auxiliary storage device 903.

Further, at least a portion of the OS is executed by the processor 901.

While executing at least the portion of the OS, the processor 901 executes the programs that implement the functions of the designation unit 501, the control unit 503, and the communication unit 504.

Through execution of the OS by the processor 901, task management, memory management, file management, communication control, or the like is carried out.

Meanwhile, at least any of information, data, signal values, and variable values that indicate results of processes by the designation unit 501, the control unit 503, and the communication unit 504 is stored in at least any of the main storage device 902, the auxiliary storage device 903, and a register and a cache memory in the processor 901.

Meanwhile, the programs that implement the functions of the designation unit 501, the control unit 503, and the communication unit 504 may be stored in a portable recording medium such as magnetic disk, flexible disk, optical disk, compact disc, Bluray (registered trademark) disk, or DVD. Additionally, the portable recording medium in which the programs that implement the functions of the designation unit 501, the control unit 503, and the communication unit 504 are stored may be distributed.

Meanwhile, the "unit" of the designation unit 501, the control unit 503, and the communication unit 504 may be read as "circuit" or "step" or "procedure" or "process".

Further, the control device 500 may be implemented by a processing circuit. The processing circuit is a logic IC (Integrated Circuit), a GA (Gate Array), an ASIC (Application Specific Integrated Circuit), or an FPGA (Field-Programmable Gate Array), for instance.

In this case, the designation unit 501, the control unit 503, and the communication unit 504 are each implemented as a portion of the processing circuit.

Herein, incidentally, a superordinate concept to processor and processing circuit is referred to as "processing circuitry".

That is, processor and processing circuit are specific examples of "processing circuitry".

### Reference Signs List

2: air conditioner; 4: human detection sensor; 5: temperature sensor; 10: main unit; 11: suction port; 12: center; 13: heat exchanger; 14: blower; 20: blowing unit; 21: blow port; 23: up-down wind direction vane; 30: duct; 100: space; 101: area; 104: roof space; 500: control device; 501: designation unit; 502: storage unit; 503: control unit; 504: communication unit; 901: processor; 902: main storage device; 903: auxiliary storage device; 904: communication device

## Claims

1. A control device (500) to control a plurality of air conditioners (2) that are placed in a space (100) so as to adjoin, **characterized in that** the control device comprises:
a designation unit (501) to designate an air conditioner being placed in an area (101A) in the space where presence of any person is detected, as a first air conditioner, and to designate an air conditioner being placed adjacent to the first air conditioner and being placed in an area (101B) in the space where presence of any person is not detected, as a second air conditioner, among the plurality of air conditioners; and
a control unit (503) to cause the first air conditioner to carry out either of cooling operation and heating operation as air conditioning operation, and to cause the second air conditioner to carry out air blowing operation with an air volume in a range between ±10% and ±30% of an air volume of the air conditioning operation by the first air conditioner and with a same wind direction as a wind direction of the air conditioning operation by the first air conditioner.

2. The control device according to claim 1, **characterized in that**
in case where air conditioners are placed on both sides of the first air conditioner and are placed in areas in the space where presence of any person is not detected, the designation unit designates each of the air conditioners on both the sides of the first air conditioner, as a second air conditioner, and
the control unit causes each of the second air conditioners to carry out the air blowing operation with an air volume in a range between ±10% and ±30% of the air volume of the air conditioning operation by the first air conditioner and with a same wind direction as the wind direction of the air conditioning operation by the first air conditioner.

3. The control device according to claim 1, **characterized in that**
the plurality of air conditioners each include a plurality of blow ports (21), and
the control unit causes the second air conditioner to carry out the air blowing operation while controlling an air volume and a wind direction from each of the blow ports of the second air conditioner so that the air volume is in the range between ±10% and ±30% of the air volume from a corresponding blow port of the first air conditioner and the wind direction becomes the same as a wind direction from the corresponding blow port of the first air conditioner.

4. The control device according to claim 1, **characterized in that**
in case where a third air conditioner being an air conditioner other than the first air conditioner and the second air conditioner is placed adjacent to the second air conditioner, the control unit causes the third air conditioner to carry out neither of the air conditioning operation and the air blowing operation.

5. The control device according to claim 1, **characterized in that**
the plurality of air conditioners are a plurality of ceiling mounted air conditioners placed in an array, and
in case where an air conditioner is placed diagonally but not adjacent in the array with respect to the first air conditioner, the control unit causes the air conditioner being placed diagonally but not adjacent in the array with respect to the first air conditioner, to carry out neither of the air conditioning operation and the air blowing operation.

6. A control method for controlling a plurality of air conditioners, **characterized by** comprising the steps of
designating, by a computer to control a plurality of air conditioners (2) that are placed in a space (100) so as to adjoin, an air conditioner being placed in an area (101A) in the space where presence of any person is detected, as a first air conditioner, and designating an air conditioner being placed adjacent to the first air conditioner and being placed in an area (101B) in the space where presence of any person is not detected, as a second air conditioner, among the plurality of air conditioners; and
causing, by the computer, the first air conditioner to carry out either of cooling operation and heating operation as air conditioning operation, and causing the second air conditioner to carry out air blowing operation with an air volume in a range between ±10% and ±30% of an air volume of the air conditioning operation by the first air conditioner and with a same wind direction as a wind direction of the air conditioning operation by the first air conditioner.

## Patentansprüche

1. Steuervorrichtung (500) zur Steuerung einer Vielzahl von Klimageräten (2), die in einem Raum (100) so angeordnet sind, dass sie aneinander angrenzen, **dadurch gekennzeichnet, dass** die Steuervorrichtung umfasst:
eine Bestimmungseinheit (501), um ein Klimagerät, das in einem Bereich (101A) in dem Raum angeordnet ist, in dem die Anwesenheit einer Person erfasst wird, als ein erstes Klimagerät zu bestimmen, und um ein Klimagerät, das neben dem ersten Klimagerät und in einem Bereich (101B) in dem Raum angeordnet ist, in dem die Anwesenheit einer Person nicht erfasst wird, als ein zweites Klimagerät unter der Vielzahl von Klimageräten zu bestimmen, und
eine Steuereinheit (503), um das erste Klimagerät zu veranlassen, entweder einen Kühlbetrieb oder einen Heizbetrieb als Klimatisierungsbetrieb durchzuführen, und das zweite Klimagerät zu veranlassen, einen Luftblasbetrieb mit einer Luftmenge in einem Bereich zwischen ±10% und ±30% einer Luftmenge des Klimatisierungsbetriebs durch das erste Klimagerät und mit einer gleichen Windrichtung wie eine Windrichtung des Klimatisierungsbetriebs durch das erste Klimagerät durchzuführen.

2. Steuervorrichtung nach Anspruch 1, **dadurch gekennzeichnet, dass**
für den Fall, dass Klimageräte an beiden Seiten des ersten Klimageräts angeordnet sind und in Bereichen in dem Raum angeordnet sind, in denen die Anwesenheit einer Person nicht erfasst wird, die Bestimmungseinheit jedes der Klimageräte an beiden Seiten des ersten Klimageräts als ein zweites Klimagerät bestimmt, und
die Steuereinheit jedes der zweiten Klimageräte veranlasst, den Luftblasbetrieb mit einer Luftmenge in einem Bereich zwischen ±10% und ±30% der Luftmenge des Klimatisierungsbetriebs durch das erste Klimagerät und mit einer gleichen Windrichtung wie die Windrichtung des Klimatisierungsbetriebes durch das erste Klimagerät durchzuführen.

3. Steuervorrichtung nach Anspruch 1, **dadurch gekennzeichnet, dass**
die Vielzahl von Klimageräten jeweils eine Vielzahl von Ausblasöffnungen (21) aufweist, und
dass die Steuereinheit das zweite Klimagerät veranlasst, den Luftblasbetrieb auszuführen, während sie eine Luftmenge und eine Windrichtung von jeder der Ausblasöffnungen des zweiten Klimageräts steuert, so dass die Luftmenge in dem Bereich zwischen ±10% und ±30% der Luftmenge von einer entsprechenden Ausblasöffnung des ersten Klimageräts liegt und die Windrichtung dieselbe wird wie eine Windrichtung von der entsprechenden Ausblasöffnung des ersten Klimageräts.

4. Steuervorrichtung nach Anspruch 1, **dadurch gekennzeichnet, dass**
für den Fall, dass ein drittes Klimagerät, das sich von dem ersten Klimagerät und dem zweiten Klimagerät unterscheidet, neben dem zweiten Klimagerät angeordnet ist, die Steuereinheit das dritte Klimagerät veranlasst, weder den Klimatisierungsbetrieb noch den Luftblasbetrieb durchzuführen.

5. Steuervorrichtung nach Anspruch 1, **dadurch gekennzeichnet, dass**
die Vielzahl von Klimageräten eine Vielzahl von an der Decke montierten und in einer Anordnung angeordneten Klimageräten ist, und
für den Fall, dass ein Klimagerät diagonal, aber nicht benachbart in der Anordnung in Bezug auf das erste Klimagerät angeordnet ist, die Steuereinheit bewirkt, dass das Klimagerät, das diagonal, aber nicht benachbart in der Anordnung in Bezug auf das erste Klimagerät angeordnet ist, weder den Klimatisierungsbetrieb noch den Luftblasbetrieb ausführt.

6. Steuerverfahren zum Steuern einer Vielzahl von Klimageräten, **dadurch gekennzeichnet, dass** es die folgenden Schritte umfasst:
Bestimmen mittels eines Computers zum Steuern einer Vielzahl von Klimageräten (2), die in einem Raum (100) so angeordnet sind, dass sie aneinander angrenzen, eines Klimageräts, das in einem Bereich (101A) in dem Raum angeordnet ist, in dem die Anwesenheit einer Person erkannt wird, als ein erstes Klimagerät, und Bestimmen eines Klimageräts, das neben dem ersten Klimagerät angeordnet ist und in einem Bereich (101B) in dem Raum angeordnet ist, in dem die Anwesenheit einer Person nicht erkannt wird, als ein zweites Klimagerät unter der Vielzahl von Klimageräten; und
Veranlassen des ersten Klimageräts durch den Computer, entweder einen Kühlbetrieb oder einen Heizbetrieb als Klimatisierungsbetrieb durchzuführen, und Veranlassen des zweiten Klimageräts, einen Luftblasbetrieb mit einer Luftmenge in einem Bereich zwischen ±10% und ±30% einer Luftmenge des Klimatisierungsbetriebs durch das erste Klimagerät und mit einer gleichen Windrichtung wie eine Windrichtung des Klimatisierungsbetriebs durch das erste Klimagerät durchzuführen.

## Revendications

1. Dispositif de commande (500) pour commander une pluralité de climatiseurs (2) qui sont placés dans un espace (100) de façon à être contigus, **caractérisé en ce que** le dispositif de commande comprend :
une unité de désignation (501) pour désigner un climatiseur placé dans une zone (101A) dans l'espace où la présence d'une personne est détectée, en tant que premier climatiseur, et pour désigner un climatiseur placé adjacent au premier climatiseur et placé dans une zone (101B) dans l'espace où la présence d'une personne n'est pas détectée, en tant que deuxième climatiseur, parmi la pluralité de climatiseurs ; et
une unité de commande (503) pour amener le premier climatiseur à réaliser l'une ou l'autre d'une opération de refroidissement et d'une opération de chauffage en tant qu'opération de climatisation, et pour amener le deuxième climatiseur à réaliser une opération de soufflage d'air avec un volume d'air dans une plage entre ±10 % et ±30 % d'un volume d'air de l'opération de climatisation par le premier climatiseur et avec une même direction du vent qu'une direction du vent de l'opération de climatisation par le premier climatiseur.

2. Dispositif de commande selon la revendication 1, **caractérisé en ce que**
dans le cas où les climatiseurs sont placés des deux côtés du premier climatiseur et sont placés dans des zones dans l'espace où la présence d'une personne n'est pas détectée, l'unité de désignation désigne chacun des climatiseurs des deux côtés du premier climatiseur, en tant que deuxième climatiseur, et
l'unité de commande amène chacun des deuxièmes climatiseurs à réaliser l'opération de soufflage d'air avec un volume d'air dans une plage entre ±10 % et ±30 % du volume d'air de l'opération de climatisation par le premier climatiseur et avec une même direction du vent que la direction du vent de l'opération de climatisation par le premier climatiseur.

3. Dispositif de commande selon la revendication 1, **caractérisé en ce que**
la pluralité de climatiseurs incluent chacun une pluralité d'orifices de soufflage (21), et
l'unité de commande amène le deuxième climatiseur à réaliser l'opération de soufflage d'air tout en commandant un volume d'air et une direction du vent à partir de chacun des orifices de soufflage du deuxième climatiseur de sorte que le volume d'air soit dans la plage entre ±10 % et ±30 % du volume d'air à partir d'un orifice de soufflage correspondant du premier climatiseur et que la direction du vent devienne la même qu'une direction du vent à partir de l'orifice de soufflage correspondant du premier climatiseur.

4. Dispositif de commande selon la revendication 1, **caractérisé en ce que**
dans le cas où un troisième climatiseur qui est un climatiseur autre que le premier climatiseur et le deuxième climatiseur est placé adjacent au deuxième climatiseur, l'unité de commande amène le troisième climatiseur à ne réaliser ni l'opération de climatisation ni l'opération de soufflage d'air.

5. Dispositif de commande selon la revendication 1, **caractérisé en ce que**
la pluralité de climatiseurs sont une pluralité de climatiseurs montés au plafond placés selon un réseau, et
dans le cas où un climatiseur est placé en diagonale mais non adjacent dans le réseau par rapport au premier climatiseur, l'unité de commande amène le climatiseur placé en diagonale mais non adjacent dans le réseau par rapport au premier climatiseur, à ne réaliser ni l'opération de climatisation ni l'opération de soufflage d'air.

6. Procédé de commande pour commander une pluralité de climatiseurs, **caractérisé en ce qu'**il comprend les étapes consistant à désigner, par un ordinateur pour commander une pluralité de climatiseurs (2) qui sont placés dans un espace (100) de façon à être contigus, un climatiseur placé dans une zone (101A) dans l'espace où la présence d'une personne est détectée, en tant que premier climatiseur, et à désigner un climatiseur placé adjacent au premier climatiseur et placé dans une zone (101B) dans l'espace où la présence d'une personne n'est pas détectée, en tant que deuxième climatiseur, parmi la pluralité de climatiseurs ; et
à amener, par l'ordinateur, le premier climatiseur à réaliser l'une ou l'autre d'une opération de refroidissement et d'une opération de chauffage en tant qu'opération de climatisation, et à amener le deuxième climatiseur à réaliser une opération de soufflage d'air avec un volume d'air dans une plage entre ±10 % et ±30 % d'un volume d'air de l'opération de climatisation par le premier climatiseur et avec une même direction du vent qu'une direction du vent de l'opération de climatisation par le premier climatiseur.
